# FASCICULE DE BREVET EUROPEEN

(11) **EP 0 670 256 B1**
(45) Date de publication et mention de la délivrance du brevet: **01.05.1996**
(21) Numéro de dépôt: 95400406.5
(22) Date de dépôt: 27.02.1995
(51) Int. Cl.: B62B 3/06, B60G 21/055

(54) **Chariot de manutention avec roues stabilisatrices**
Gabelhubwagen mit Stabilisationsrädern
Fork lift truck comprising stabilising wheels

(30) Priorité: 04.03.1994 FR 9402515
(43) Date de publication de la demande: 06.09.1995
(73) Titulaire: M I C, Société Anonyme, F-61208 Argentan Cédex (FR)
(72) Inventeur: Le Gloan, André, F-61208 Argentan Cédex (FR)
(74) Mandataire: Cournarie, Michèle

(56) Documents cités:
- EP-A- 0 556 543
- FR-A- 1 087 419
- FR-A- 2 606 765
- FR-A- 2 667 546

## Description

La présente invention concerne un chariot de manutention du type comprenant un châssis pourvu de plusieurs roues lui permettant de rouler sur le sol, dont l'une est une roue motrice et directrice située dans un plan médian longitudinal du chariot, deux autres roues étant des roues stabilisatrices orientables situées respectivement de part et d'autre de la roue motrice et directrice, chaque roue stabilisatrice étant montée à la fois pivotante autour d'un axe vertical et mobile en direction verticale par rapport au châssis, et dans lequel au moins un élément à effet de ressort agit sur les deux roues stabilisatrices par l'intermédiaire d'un mécanisme qui comprend deux leviers reliés par une barre anti-roulis et qui transmet une force verticale dirigée vers le bas auxdites roues stabilisatrices.

Dans les chariots de manutention connus de ce type, il peut être prévu un unique élément à effet de ressort, comme cela est décrit dans le brevet français n°2 667 546, ou deux éléments à effet de ressort qui sont placés respectivement au-dessus des roues stabilisatrices, comme cela est par exemple le cas dans les chariots de manutention commercialisés par la Société BT (AKTIEBOLAGET BYGG-OCH TRANSPORTEKONOMI). Dans ces chariots connus, chacune des deux roues stabilisatrices est respectivement attachée à l'un des deux leviers situés aux extrémités de la barre antiroulis. Dans ces conditions, lorsque, dans un virage ou sur un plan incliné ou encore sous l'effet du balancement occasionné par la charge, le chariot penche d'un côté, la roue stabilisatrice située du côté vers lequel penche le chariot exerce une poussée verticale orientée vers le haut sur le levier associé. Cette poussée verticale a pour effet de faire tourner la barre anti-roulis autour de son axe longitudinal dans ses paliers de support. Il en résulte que le ou les éléments à effet de ressort, par exemple des ressorts hélicoïdaux, sont comprimés et que le levier associé à la roue stabilisatrice opposée, c'est-à-dire celle qui se trouve du côté opposé au côté vers lequel le chariot penche, tourne également avec la barre anti-roulis. En conséquence ladite roue stabilisatrice opposée se soulève et perd le contact avec le sol. De ce fait, elle n'est plus dirigée par contact avec le sol et, comme elle est auto-orientable, elle peut prendre n'importe quelle orientation pendant qu'elle n'est plus en contact avec le sol. En conséquence, lorsque le chariot reprend sa position normale, au moment où la roue stabilisatrice reprend contact avec le sol, elle peut avoir une orientation perpendiculaire à la direction d'avance du chariot. Si cela arrive, la roulette ou les éléments qui assurent son montage par rapport au châssis du chariot peuvent subir des dégâts importants.

La présente invention a pour but de remédier à cet inconvévient.

A cet effet, l'invention fournit un chariot de manutention du type indiqué plus haut, caractérisé en ce que ledit mécanisme n'est pas attaché aux roues stabilisatrices, mais prend seulement appui, par de simples surfaces de contact, sur des éléments respectifs de montage des roues stabilisatrices, de sorte que ledit mécanisme soit libre de s'écarter desdits éléments de montage de la roue stabilisatrice correspondante dans un sens opposé au sens d'action dudit élément à effet de ressort, et en ce que des moyens de retenue sont associés à chaque roue stabilisatrice pour limiter leur déplacement vers le bas par rapport au châssis.

Dans ces conditions, lorsque l'une des deux roues stabilisatrices repousse vers le haut l'un des deux leviers de la barre anti-roulis, l'autre levier s'écarte de l'autre roue stabilisatrice, qui reste en contact avec le sol et, par suite, continue à être dirigée par son contact avec le sol. Les deux roues stabilisatrices gardent donc toujours une orientation correcte et les inconvénients mentionnés plus haut sont évités.

D'autres caractéristiques et avantages de la présente invention ressortiront au cours de la description qui va suivre de diverses formes d'exécution de l'invention données à titre d'exemple en référence aux dessins annexés sur lesquels :
la figure 1 est une vue en perspective montrant le train de roues avant d'un chariot de manutention conforme à la présente invention, seule une petite partie du châssis du chariot étant représentée.
La figure 2 est une vue en perspective montrant une variante de réalisation de la barre anti-roulis utilisée dans le chariot de la figure 1.
La figure 3 est une vue en partie en coupe et en partie en élévation, montrant les deux roues stabilisatrices du chariot de la figure 1 et illustrant une situation possible pour les deux roues.
La figure 4 est une vue semblable à la figure 3, mais ne montre qu'une seule roue stabilisatrice dans une variante de réalisation de l'invention.
La figure 5 est une vue schématique montrant une autre variante de réalisation de l'invention.

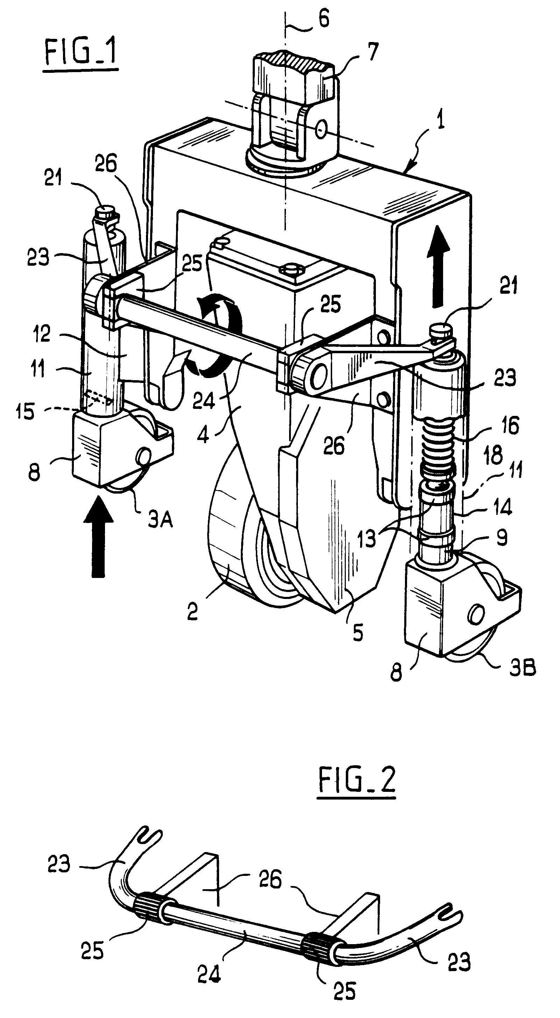

Le chariot de manutention de la présente invention peut être par exemple un chariot du genre "transpalette" ou du genre "gerbeur", et il peut être du type à conducteur porté, comme le chariot décrit dans le brevet français n°2 667 546, ou du type à conducteur accompagnant, c'est-à-dire dont le conducteur marche à côté du chariot. Comme montré dans la figure 1, les chariots de ce genre comprennent un châssis 1 sur un côté duquel est montée une fourche (non montrée dans la figure 1) dont les deux bras s'étendent en gros horizontalement à partir de la partie inférieure du châssis 1. A son extrémité libre, chacun des bras de la fourche repose sur le sol par l'intermédiaire d'au moins une roulette (non montrée). Comme cela est bien connu, la fourche est habituellement montée mobile sur le châssis 1 pour pouvoir être abaissée et relevée en vue de saisir une charge, par exemple une palette.

Comme montré dans la figure 1, le châssis 1, qui a par exemple une forme en U renversé, repose sur le sol par l'intermédiaire de trois roues. Ces roues sont les roues avant du chariot et comprennent une roue centrale 2, qui est à la fois motrice et directrice, et deux roues stabilisatrices orientables 3A et 3B, qui sont situées respectivement de part et d'autre de la roue 2.

La roue 2 est montée à rotation dans un support de roue 4, qui porte également un groupe d'entraînement 5 propre à entraîner la roue 2 en rotation. Le groupe d'entraînement 5 peut être par exemple un moteur hydraulique ou un groupe moto-réducteur à moteur électrique. Le support de roue 4 est monté pivotant par rapport au chassis 1 autour d'un axe vertical indiqué schématiquement en 6 dans la figure 1. De manière classique, un timon de manoeuvre 7 (partiellement représenté dans la figure 1) est relié au support de roue 4, à l'extrémité supérieure de son axe vertical de pivotement, et permet au conducteur du chariot d'orienter la roue 2 dans la direction d'avance désirée.

Chaque roue stabilisatrice 3 est montée à rotation dans une chape 8 munie d'un pivot vertical 9, qui est monté à la fois coulissant et à rotation dans un logement cylindrique 11 d'axe vertical, fixé rigidement au châssis 1, directement ou par l'intermédiaire d'une monture appropriée, comme celle montrée schématiquement en 12 dans la figure 1.

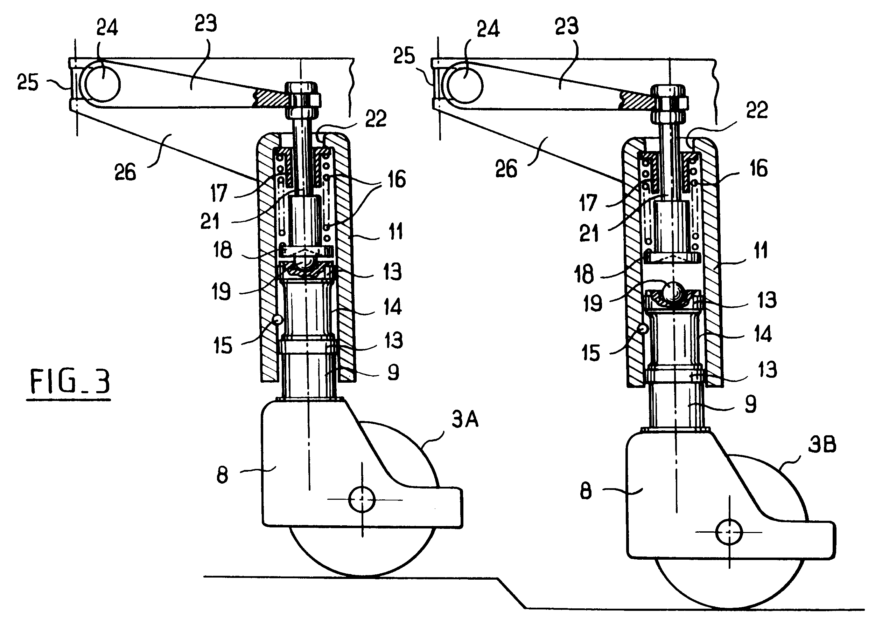

Comme cela est mieux visible dans la figure 3, le pivot 9 de chacune des deux roues stabilisatrices 3A et 3B porte deux bagues anti-friction espacées 13 lui permettant de glisser axialement et de tourner dans l'alésage intérieur du logement cylindrique 11. Une large gorge 14 est formée dans la surface cylindrique de chaque pivot 9 entre les deux bagues 13. Une goupille 15, engagée dans un trou percé dans la paroi cylindrique du logement 11, fait saillie dans l'alésage intérieur du logement 11 et s'engage dans la gorge 14. La gorge 14 et la goupille 15 forment ensemble des moyens limitant les déplacements axiaux du pivot 9 dans les deux sens, et empêchant également que la roue stabilisatrice correspondante 3A ou 3B ne puisse être perdue lorsque le châssis 1 est soulevé du sol.

Comme on peut également le voir dans la figure 3, le logement cylindrique 11 de chaque pivot 9 est fermé au moins partiellement à sa partie supérieure, de manière à former une surface d'appui pour l'une des extrémités d'un ressort hélicoïdal 16. En fait, comme montré dans la figure 3, l'extrémité supérieure du ressort hélicoïdal 16 ne prend pas appui directement contre la paroi d'extrémité supérieure du logement cylindrique 11, mais contre la collerette d'une pièce cylindrique 17 de centrage et de guidage du ressort hélicoïdal 16, qui prend elle-mème appui contre la paroi d'extrémité supérieure du logement 11. L'autre extrémité ou extrémité inférieure du ressort hélicoïdal 16 prend appui sur un poussoir 18 qui, sous l'action du ressort hélicoïdal 16, exerce une force verticale de poussée sur l'extrémité supérieure du pivot 9 de la roue stabilisatrice correspondante 3A ou 3B. Afin de ne pas gêner les mouvements de rotation des pivots 9, un élément anti-friction 19 est de préférence interposé entre chaque pivot 9 et le poussoir 18 y associé. L'élément anti-friction 19 peut être par exemple constitué par une bille logée en partie dans un évidement conique ou sphérique formé dans la face d'extrémité supérieure du pivot 9 et en partie dans un évidement conique ou sphérique formé dans la face d'extrémité inférieure du poussoir 18.

Chaque poussoir 18 est pourvu d'une tige verticale 21, qui s'étend coaxialement à l'intérieur du ressort hélicoïdal 16, passe à travers la pièce de guidage et de centrage 17 et à travers une ouverture 22 prévue dans la paroi d'extrémité supérieure du logement cylindrique 11. L'extrémité supérieure de la tige 21 fait saillie au-dessus de la paroi d'extrémité supérieure du logement cylindrique 11 et est attachée par une sorte d'articulation à l'une des extrémités d'un bras de levier 23. Par exemple, cette extrémité du bras de levier 23 se présente sous la forme d'une fourche dont les branches s'engagent de part et d'autre de la tige 21 dans un espace circulaire entre deux collerettes fixées à l'extrémité supérieure de la tige 21. L'autre extrémité du levier 23 est fixée rigidement à une extrémité d'une barre anti-roulis 24. La barre 24 est montée à rotation dans des paliers appropriés 25 portés par des équerres 26, elles-mêmes fixées au châssis 1.

Ainsi à chaque roue stabilisatrice 3A ou 3B est associé un poussoir 18, un ressort hélicoïdal 16, une tige 21 et un levier 23, et les deux leviers sont respectivement fixés aux extrémités de la barre antiroulis 24 comme cela est plus particulièrement visible dans la figure 1. Les deux leviers 23 et la barre antiroulis 24, au lieu d'être réalisés sous la forme de trois éléments séparés et fixés les uns aux autres, peuvent être réalisés sous la forme d'une barre unique dont les extrémités sont cintrées comme montré dans la figure 2.

On va maintenant expliquer comment le système décrit ci-dessus fonctionne pour stabiliser le chariot. Lorsque le chariot a tendance à pencher d'un côté dans un virage ou sur un plan incliné ou encore par un effet de balancement occasionné par la charge qu'il porte, le pivot 9 de la roue stabilisatrice située du côté vers lequel penche le chariot, par exemple le pivot 9 de la roue stabilisatrice 3A s'enfonce dans son logement cylindrique 11 et repousse vers le haut le poussoir 18 tout en comprimant le ressort hélicoïdal 16 qui se trouve au-dessus de lui, comme montré dans la partie gauche de la figure 3. Le mouvement ascendant du poussoir 18 associé à la roue stabilisatrice 3A est transmis au poussoir 18 associé à la roue stabilisatrice 3B, par l'intermédiaire des deux tiges 21 respectivement associées aux deux poussoirs et par l'intermédiaire des des deux leviers 23 et de la barre anti-roulis 24. Il en résulte que le ressort hélicoïdal 16 qui se trouve au-dessus de la roue stabilisatrice 3B est aussi comprimé. Par suite, les forces des deux ressorts hélicoïdaux 16 s'ajoutent pour s'opposer à l'enfoncement du pivot 9 de la roue stabilisatrice 3A dans son logement cylindrique 11. En conséquence, le pivot 9 de la roue stabilisatrice 3A s'enfonce dans son logement cylindrique 11 d'une quantité moindre que si un seul ressort agissait sur lui, et le chariot penche moins.

En outre, dans les conditions de fonctionnement décrites ci-dessus, la force de traction dirigée vers le haut, qui est exercée par la barre anti-roulis 24 et par le levier 23 sur la tige 21 du poussoir 18 situé au-dessus de la roue stabilisatrice 3B, annule en partie ou totalement la force de poussée verticale, dirigée vers le bas, que le ressort hélicoïdal 16 exerçait sur l'extrémité supérieure du pivot 9 de la roue stabilisatrice 3B. Il en résulte que la poussée verticale, dirigée vers le haut, que la roue stabilisatrice 3B exerce sur le châssis, par réaction sur le sol, est diminuée ou même supprimée. Ceci contribue également à augmenter la stabilité, car la poussée verticale, dirigée vers le haut, exercée par la roue stabilisatrice 3B sur le châssis avait pour effet d'accentuer la tendance du chariot à pencher du côté de la roue 3A.

Comme aucun des deux poussoirs 18 n'est attaché au pivot 9 de la roue stabilisatrice 3A ou 3B correspondante, il peut arriver, en service, dans les conditions évoquées plus haut, que le poussoir 18 s'écarte de l'extrémité supérieure du pivot 9 correspondant, par exemple du pivot 9 de la roue stabilisatrice 3B dans le cas décrit plus haut, comme cela est représenté dans la partie droite de la figure 3. Dans ces conditions, non seulement la poussée verticale, dirigée vers le haut, de la roue stabilisatrice 3B sur le châssis du chariot est supprimée, ce qui contribue comme on l'a déjà indiqué à augmenter la stabilité du chariot, mais aussi la roue stabilisatrice 3B n'est pas soulevée au-dessus du sol par le mécanisme de stabilisation ou mécanisme antiroulis. Au lieu de cela, comme montré dans la partie droite de la figure 3, la roue stabilisatrice 3B reste en contact avec le sol et, du fait que l'axe de rotation de la roue est déporté par rapport à l'axe du pivot 9, la roue 3B continue à être dirigée et à rester alignée avec la direction d'avance du chariot. En conséquence, elle ne risque pas de se mettre en travers par rapport à la direction d'avance du chariot et, par suite, la roue stabilisatrice ou ses éléments de montage ne risquent pas d'être endommagés.

Dans la description qui précède, on a supposé que le chariot penchait du côté de la roue stabilisatrice 3A et que c'était le pivot 9 de cette roue 3A qui s'enfonçait dans son logement 11. Toutefois, étant donné que le mécanisme de stabilisation est complètement symétrique, son fonctionnement serait tout-à-fait semblable à celui décrit plus haut si le chariot penchait du côté de la roue stabilisatrice 3B et si c'était le pivot 9 de cette roue 3B qui s'enfonçait dans son logement 11.

La gorge 14 et la goupille 15 associée au pivot 9 de chacune des deux roues stabilisatrices 3A et 3B permet de limiter le déplacement axial du pivot 9 dans le logement 11 correspondant et permet d'éviter la perte de la roue stabilisatrice correspondante lorsque le chariot est soulevé. Il y a lieu de noter que la largeur de la gorge 14, c'est-à-dire sa dimension dans le sens axial du pivot 9, est de préférence au moins aussi grande que le débattement vertical maximal prévu pour le mécanisme de stabilisation, afin que la goupille 15 ne gène pas le fonctionnement normal du mécanisme de stabilisation.

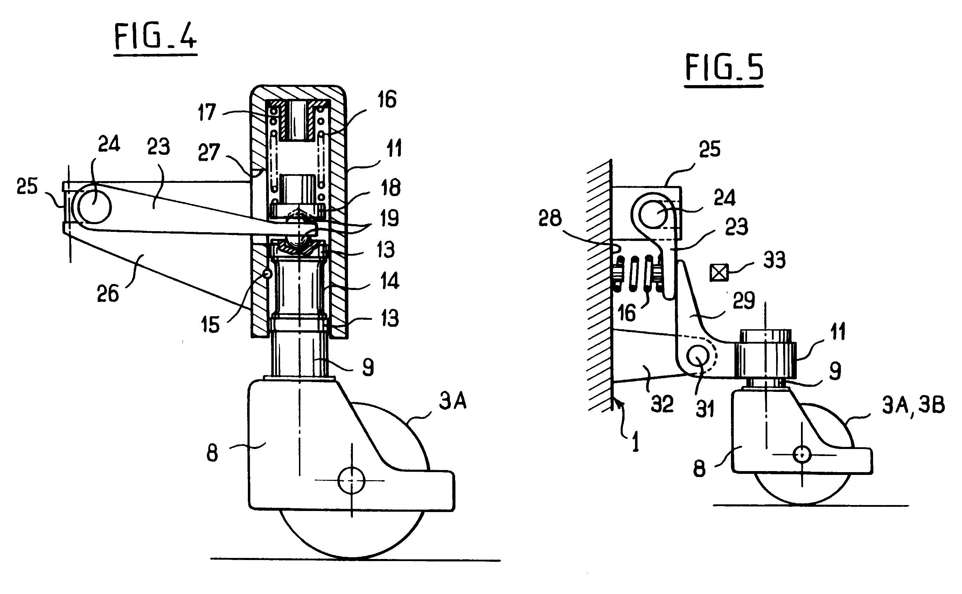

La figure 4 montre une variante de réalisation du mécanisme de stabilisation. Dans la figure 4, on n'a représenté qu'une seule des deux roues stabilisatrices, par exemple la roue 3A, étant entendu que les éléments du mécanisme de stabilisation qui sont associés à l'autre roue stabilisatrice 3B sont identiques à ceux montrés dans la figure 4. Dans cette figure, les éléments qui sont identiques ou qui jouent le même rôle que ceux du mode de réalisation des figures 1 et 3 sont désignés par les mêmes numéros de référence et ne seront pas décrits à nouveau en détail. Le mode de réalisation représenté dans la figure 4 diffère du mode de réalisation précédent en ce que la tige 21 de chaque poussoir 18 est supprimée et chaque levier 23 agit directement sur l'extrémité supérieure du pivot 9 de la roue stabilisatrice correspondante 3A ou 3B. Plus précisément, chaque logement cylindrique 11 comporte une fente verticale 27 qui s'étend longitudinalement dans la paroi cylindrique du logement 11 et par laquelle le levier 23 pénètre à l'intérieur dudit logement. L'extrémité du levier 23 qui est située à l'intérieur du logement 11 est en contact vers le haut avec la surface inférieure du poussoir 18 et vers le bas avec la surface d'extrémité supérieure du pivot 9 de la roue stabilisatrice. Un élément anti-friction 19 est interposé entre le pivot 9 et le levier 23 et entre celui-ci et le poussoir 18. L'élément anti-friction 19 peut être constitué par une unique bille enchâssée dans l'extrémité du levier 23, ou par deux protubérances hémisphériques fixées respectivement sur les faces inférieure et supérieure de l'extrémité du levier 23.

Le mécanisme de stabilisation conforme à la figure 4 fonctionne sensiblement de la même manière que celui des figures 1 et 3. Lorsque le chariot penche d'un côté, par exemple du côté de la roue stabilisatrice 3A, le pivot 9 de la roue 3A s'enfonce dans son logement 11 en comprimant le ressort 16 qui se trouve au dessus de lui et en comprimant également, par l'intermédiaire des deux leviers 23 et de la barre anti-roulis 24, le ressort 16 qui se trouve au-dessus de l'autre roue stabilisatrice 3B. En même temps, le levier 23 qui est situé au-dessus de la roue stabilisatrice 3B tend à s'écarter de l'extrémité supérieure du pivot 9 de la roue 3B, mais celle-ci reste en contact avec le sol. Dans ces conditions et du fait de son déport par rapport à l'axe du pivot 9, la roue 3B reste orientée dans la direction d'avance du chariot.

Dans les modes de réalisation décrits précédemment, les ressorts hélicoïdaux 16 étaient disposés verticalement. Toutefois, une telle disposition n'est pas nécessaire pour la mise en oeuvre de la présente invention. La figure 5 montre schématiquement une autre réalisation de l'invention dans laquelle les ressorts 16 peuvent être disposés horizontalement. Dans ce cas, l'une des extrémités de chaque ressort 16 prend appui contre une surface verticale de butée 28 appartenant au châssis 1 du chariot. L'autre extrémité du ressort 16 prend appui sur un côté de l'un des leviers 23, qui s'étend en gros verticalement vers le bas à partir de la barre anti-roulis 24 et qui prend lui-même appui, par son autre côté, contre l'un des deux bras d'un levier coudé 29. L'autre bras du levier coudé 29 s'étend sensiblement horizontalement et porte le logement 11 pour le pivot 9 de l'une des deux roues stabilisatrices 3A et 3B. Dans ce cas, le pivot 9 est seulement monté à rotation dans le logement 11, sans possibilité de mouvement axial dans celui-ci. Ici, le mouvement vertical de la roue stabilisatrice 3A ou 3B est permis par le fait que le levier coudé 29 est articulé, dans la région de son coude, autour d'un axe 31 qui est parallèle à la barre anti-roulis 24 et qui est supporté par une monture appropriée 32 fixée au châssis 1.

Avec le mode de réalisation de la figure 5, lorsque le chariot penche d'un côté, la réaction du sol sur la roue de stabilisation située du côté vers lequel penche le chariot fait pivoter dans le sens inverse des aiguilles d'une montre autour de l'axe 31 le levier coudé 29 associé à cette roue de stabilisation. Ce levier coudé 29 comprime donc le ressort hélicoïdal 16 situé du même côté que lui, mais aussi le ressort hélicoïdal 16 situé de l'autre côté du chariot par l'intermédiaire des leviers 23 et de la barre antiroulis 24. En même temps, le levier 23 situé de l'autre côté du chariot s'écarte du levier coudé 29 qui supporte l'autre roue de stabilisation et cette dernière reste en contact avec le sol.

Un élément de retenue ou butée 33, qui est fixé au châssis 1, limite le déplacement vertical de la roue de stabilisation 3A ou 3B vers le bas. Bien que dans la figure 5 la butée 33 soit représentée placée sur le trajet du bras sensiblement vertical du levier coudé 29, elle pourrait également se trouver sur le trajet du bras sensiblement horizontal du levier coudé 29.

Il est du reste bien entendu que les modes de réalisation qui ont été décrits ci-dessus ont été donnés à titre d'exemple purement indicatif et nullement limitatif, et que de nombreuses modifications peuvent être facilement apportées par l'homme de l'art sans pour autant sortir du cadre de l'invention. C'est ainsi notamment que la liaison entre chaque levier 23 et l'extrémité supérieure de la tige 21 correspondante peut être différente de celle qui est montrée dans les figures 1 et 3. Par exemple, chaque levier 23 peut se terminer par un doigt qui est engagé dans le trou d'un oeillet fixé à l'extrémité supérieure de la tige 21. En outre, au lieu de prévoir deux ressorts hélicoïdaux 16, un pour chaque roue de stabilisation, on peut prévoir un unique ressort hélicoïdal agissant sur un bras de levier supplémentaire fixé à la barre anti-roulis suivant une disposition semblable à celle décrite dans le brevet français N° 2 667 546. Dans ce cas, l'unique ressort hélicoïdal sera de préférence choisi de telle sorte que sa force soit égale au double de la force de chacun des deux ressorts 16. Il est également possible de remplacer le ou les ressorts 16 par des éléments ayant un effet de ressort, comme par exemple des tampons en matière élastomère ou des tampons pneumatiques.

## Revendications

1. Chariot de manutention comprenant un châssis (1) pourvu de plusieurs roues (2,3) lui permettant de rouler sur le sol, dont l'une est une roue motrice et directrice (2) située dans le plan médian longitudinal du chariot, deux autres roues (3A,3B) étant des roues stabilisatrices orientables situées respectivement de part et d'autre de la roue motrice et directrice, chaque roue stabilisatrice (3A,3B) étant montée à la fois pivotante autour d'un axe vertical et mobile en direction verticale par rapport au châssis (1), et dans lequel au moins un élément (16) à effet de ressort agit sur les deux roues stabilisatrices (3A,3B) par l'intermédiaire d'un mécanisme (18,21,23,24) qui comprend deux leviers (23) reliés par une barre antiroulis (24) et qui transmet une force verticale dirigée vers le bas auxdites roues stabilisatrices, caractérisé en ce que ledit mécanisme (18,21,23,24) n'est pas attaché aux roues stabilisatrices (3A, 3B), mais prend seulement appui, par de simples surfaces de contact, sur des éléments respectifs de montage (9) des roues stabilisatrices (3A,3B), de sorte que ledit mécanisme soit libre de s'écarter desdits éléments de montage de la roue stabilisatrice correspondante dans un sens opposé au sens d'action dudit élément (16) à effet de ressort, et en ce que des moyens de retenue (14, 15; 33) sont associés à chaque roue stabilisatrice (3A, 3B) pour limiter leur déplacement vers le bas par rapport au châssis (1).

2. Chariot selon la revendication 1, dans lequel chaque roue stabilisatrice (3A,3B) est montée à rotation dans une chape (8) munie d'un pivot vertical (9), qui est monté coulissant et à rotation dans un logement cylindrique (11) d'axe vertical solidaire du châssis, caractérisé en ce que le logement cylindrique (11) du pivot (9) de chaque roue stabilisatrice (3A, 3B) est fermé en haut, au moins en partie, par une paroi supérieure, en ce qu'un élément (16) à effet de ressort est disposé dans le logement cylindrique (11) du pivot de chaque roue stabilisatrice (3A, 3B) entre ladite paroi supérieure du logement et un poussoir (18) qui fait partie dudit mécanisme et qui est mobile verticalement dans ledit logement.

3. Chariot selon la revendication 2, caractérisé en ce que chaque poussoir (18) prend appui sur l'extrémité supérieure du pivot (9) de la roue stabilisatrice correspondante (3A ou 3B) et est pourvu d'une tige verticale (21) qui passe à travers l'élément (16) à effet de ressort et à travers une ouverture (22) dans la paroi supérieure du logement cylindrique (11), et dont l'extrémité supérieure fait saillie au-dessus de ladite paroi supérieure et est attachée à une extrémité de l'un des deux leviers (23) dudit mécanisme.

4. Chariot selon la revendication 3, caractérisé en ce qu'un élément anti-friction (19) est interposé entre le pivot (9) de chaque roue stabilisatrice (3A ou 3B) et le poussoir (18) y associé.

5. Chariot selon la revendication 4, caractérisé en ce que l'élément anti-friction (19) est une bille logée en partie dans un évidement formé dans la face d'extrémité supérieure du pivot (9) et en partie dans un évidement formé dans la face d'extrémité inférieure du poussoir (18).

6. Chariot selon la revendication 2, caractérisé en ce que chaque logement cylindrique (11) comporte une fente verticale (27) qui s'étend longitudinalement dans la paroi cylindrique dudit logement, en ce que les deux leviers (23) pénètrent respectivement dans les logements cylindriques (11), à travers la fente verticale (27) de ceux-ci, l'extrémité de chaque levier (23) qui est située à l'intérieur du logement cylinrique étant en contact vers le haut avec la face inférieure du poussoir (18) et vers le bas avec la face d'extrémité supérieure du pivot (9) de la roue stabilisatrice correspondante (3A ou 3B).

7. Chariot selon l'une quelconque des revendications 2 à 6, caractérisé en ce que lesdits moyens de retenue comprennent, pour chaque roue stabilisatrice (3A,3B), une gorge circulaire (14) formée dans la surface cylindrique du pivot (9) de la roue et ayant une largeur prédéterminée correspondant au déplacement vertical autorisé pour la roue stabilisatrice, et une goupille (15) qui fait saillie à l'intérieur du logement cylindrique (11) et qui pénètre dans ladite gorge (14) du pivot (9).

## Claims

1. A goods-handling cart comprising a chassis (1) provided with a plurality of wheels (2, 3) enabling it to run on the ground, one of the wheels being a drive and steer wheel (2) and being situated in the longitudinal midplane of the cart, two other wheels (3A, 3B) being swivelling stabilizing wheels situated on respective opposite sides of the drive and steer wheel, each stabilizing wheel (3A, 3B) being mounted both to pivot about a vertical axis and to move vertically relative to the chassis (1), and in which at least one spring-effect element (16) acts on both stabilizing wheels (3A, 3B) via a mechanism (18, 21, 23, 24) which includes two levers (23) that are interconnected by an anti-roll bar (24), and which transmits a downwardly-directed vertical force to said stabilizing wheels,
the cart being characterized in that said mechanism (18, 21, 23, 24) is not attached to the stabilizing wheels (3A, 3B), but merely bears against them via simple contact surfaces acting on respective mounting elements (9) for the stabilizing wheels (3A, 3B) such that said mechanism is free to move away from said corresponding stabilizing wheel mounting elements in a direction opposite to the thrust direction of said spring-effect element (16), and in that retaining means are associated with each stabilizing wheel (3A, 3B) to restrict downwards displacement thereof relative to the chassis (1).

2. A cart according to claim 1, in which each stabilizing wheel (3A, 3B) is mounted to rotate in a clevis (8) which is itself provided with a vertical pivot (9), which pivot is slidably and rotatably mounted in a vertical axis cylindrical housing (11) secured to the chassis, the cart being characterized in that the cylindrical housing (11) of the pivot (9) of each stabilizing wheel (3A, 3B) is at least partially closed in an upwards direction by a too wall, and in that a spring-effect element (16) is disposed in the cylindrical housing (11) for the pivot of each stabilizing wheel (3A, 3B) between said top wall of the housing and a pusher (18) which forms a portion of said mechanism and which is vertically movable in said housing.

3. A cart according to claim 2, characterized in that each pusher (18) bears against the top end of the pivot (9) of the corresponding stabilizing wheel (3A or 3B) and is provided with a vertical rod (21) which passes through the spring-effect element (16) and through an opening (22) in the top wall of the cylindrical housing (11), the top end of said rod projecting above said top wall and being attached to one end of one of the two levers (23) of said mechanism.

4. A cart according to claim 3, characterized in that an anti-friction element (19) is interposed between the pivot (9) of each stabilizing wheel (3A or 3B) and the pusher (18) associated therewith.

5. A cart according to claim 4, characterized in that the anti-friction element (19) is a ball housed in part in a recess formed in the top end face of the pivot (9) and in part in a recess formed in the bottom end face of the pusher (18).

6. A cart according to claim 2, characterized in that each cylindrical housing (11) includes a vertical slot (27) which extends longitudinally through the cylindrical wall of said housing, and in that both levers (23) penetrate into respective ones of the cylindrical housings (11) through the vertical slots (27) thereof, the end of each lever (23) which is situated inside the cylindrical housing being in top contact with the bottom face of the pusher (18) and in bottom contact with the top end face of the pivot (9) of the corresponding stabilizing wheel (3A or 3B).

7. A cart according to any one of claims 2 to 6, characterized in that said retaining means comprise, for each stabilizing wheel (3A, 3B), a circular groove (14) formed in the cylindrical surface of the pivot (9) of the wheel and having a predetermined width that corresponds to the vertical displacement allowed for said stabilizing wheel, together with a pin (15) that projects into the cylindrical housing (11) and that penetrates into said groove (14) of the pivot (9).

## Patentansprüche

1. Hubwagen mit einem Fahrgestell (1), das mehrere Räder (2, 3) hat, mit denen es auf dem Boden rollen kann, von denen eines ein in der Längsmittelebene des Wagens angeordnetes Antriebs- und Steuerrad (2) ist und zwei andere Räder (3A, 3B) ausrichtbare Stabilisationsräder sind, die jeweils beiderseits des Antriebs- und Steuerrads angeordnet sind, wobei jedes Stabilisationsrad (3A, 3B) gleichzeitig um eine vertikale Achse schwenkbar und in der Vertikalrichtung bezüglich des Fahrgestells (1) beweglich gelagert ist, und bei dem mindestens ein Element (16) mit Federwirkung auf die beiden Stabilisationsräder (3A, 3B) über einen Mechanismus (18, 21, 23, 24) einwirkt, der zwei über eine Stabilisationsstange (24) verbundene Hebel (23) aufweist und eine vertikale nach unten gerichtete Kraft auf die Stabilisationsräder überträgt, **dadurch gekennzeichnet**, daß der Mechanismus nicht an den Stabilisationsrädern (3A, 3B) befestigt ist, sondern nur mittels einfacher Kontaktflächen auf jeweiligen Lagerelementen (9) der Stabilisationsräder (3A, 3B) aufliegt, so daß der Mechanismus frei ist, um sich von den Lagerelementen des entsprechenden Stabilisationsrades in einer Richtung zu entfernen, die der Betätigungsrichtung des Elements (16) mit Federwirkung entgegengesetzt ist, und daß jedem Stabilisationsrad (3A, 3B) Halteeinrichtungen (14, 15; 33) zugeordnet sind, um ihre Verschiebung bezüglich des Fahrgestells (1) nach unten zu begrenzen.

2. Wagen nach Anspruch 1, bei dem jedes Stabilisationsrad (3A, 3B) in einer Abdeckung (8) mit einem vertikalen Drehzapfen (9) drehbar gelagert ist, der verschiebbar und drehbar in einem mit dem Fahrgestell einstückigen zylindrischen Sitz (11) mit vertikaler Achse gelagert ist, dadurch gekennzeichnet, daß der zylindrische Sitz (11) des Drehzapfens (9) jedes Stabilisationsrades (3A, 3B) oben zumindest teilweise durch eine obere Wand geschlossen ist, daß ein Element (16) mit Federwirkung in dem zylindrischen Sitz (11) des Drehzapfens jedes Stabilisationsrades (3A, 3B) zwischen der oberen Wand des Sitzes und einem Stößel (18) angeordnet ist, der ein Teil des Mechanismus ist und in dem Sitz vertikal beweglich ist.

3. Wagen nach Anspruch 2, dadurch gekennzeichnet, daß jeder Stößel (18) auf dem oberen Ende des Drehzapfens (9) des entsprechenden Stabilisationsrades (3A, 3B) aufliegt und eine vertikale Stange (21) hat, die durch das Element (16) mit Federwirkung und durch eine Öffnung (22) in der oberen Wand des zylindrischen Sitzes (11) hindurchtritt und deren oberes Ende über die obere Wand hinausragt und an einem Ende eines der beiden Hebel (23) des Mechanismus befestigt ist.

4. Wagen nach Anspruch 3, dadurch gekennzeichnet, daß ein Reibungsminderungselement (19) zwischen dem Drehzapfen (9) jedes Stabilisationsrades (3A oder 3B) und dem ihm zugeordneten Stößel (18) angeordnet ist.

5. Wagen nach Anspruch 4, dadurch gekennzeichnet, daß das Reibungsminderungselement (19) eine kleine Kugel ist, die teilweise in einer in der Fläche des oberen Endes des Drehzapfens (9) gebildeten Vertiefung und teilweise in einer in der Fläche des unteren Endes des Stößels (18) gebildeten Vertiefung sitzt.

6. Wagen nach Anspruch 2, dadurch gekennzeichnet, daß jeder zylindrische Sitz (11) einen vertikalen Schlitz (27) aufweist, der sich in der Längsrichtung in der zylindrischen Wand des Sitzes erstreckt, und daß die beiden Hebel (23) in die zylindrischen Sitze (11) jeweils durch deren vertikalen Schlitz (27) hineinragen, wobei das Ende jedes Hebels (23), der sich im Innern des zylindrischen Sitzes befindet, nach oben hin mit der unteren Fläche des Stößels (18) und nach unten hin mit der Fläche des oberen Endes des Drehzapfens (9) des entsprechenden Stabilisationsrades (3A oder 3B) in Kontakt ist.

7. Wagen nach einem der Ansprüche 2 bis 6, dadurch gekennzeichnet, daß die Halteeinrichtungen für jedes Stabilisationsrad (3A, 3B) eine kreisförmige Ausnehmung (14), die in der zylindrischen Oberfläche des Drehzapfens (9) des Rades ausgebildet ist und eine der zulässigen vertikalen Verschiebung des Stabilisationsrades entsprechende vorbestimmte Breite hat, sowie einen Splint bzw. Stift (15), der ins Innere des zylindrischen Sitzes (11) ragt und sich in die Ausnehmung (14) des Drehzapfens (9) erstreckt, aufweisen.
